# EUROPEAN PATENT APPLICATION

(11) **EP 3 499 681 A1**
(43) Date of publication of application: **19.06.2019**
(21) Application number: 18200890.4
(22) Date of filing: 17.10.2018
(51) Int. Cl.: H02J 7/35, H02J 13/00

(54) **CHARGE AND DISCHARGE CONTROLLER AND SOLAR POWER SUPPLY SYSTEM**

(30) Priority: 18.12.2017 CN 201721767523 U; 18.12.2017 CN 201721767522 U
(71) Applicant: Beijing Hanergy Solar Power Investment Co., Ltd., 101499 Beijing (CN)
(72) Inventor: Zhao, Zhongsheng, Beijing, Beijing 101499 (CN); Si, Wentao, Beijing, Beijing 101499 (CN)
(74) Representative: Cohausz & Florack

(57) **Abstract**

The present disclosure provides a charge and discharge controller and a solar power supply system. The charge and discharge controller includes a controller module (1) and a function expansion module (2). The controller module (1) includes a first CPU control unit (11), a first peripheral circuit unit (12), and a load output port (15) connected to the first peripheral circuit unit (12). The function expansion module (2) includes a load interface (25), a second CPU control unit (21), and a second peripheral circuit unit (22) connected to the second CPU control unit (21), and a communication port, the communication port is connected to at least of the first peripheral circuit unit (12) and the second peripheral circuit unit (22). The first CPU control unit (11) is connected to the second CPU control unit (21), and the load output port (15) is connected to the load interface (25) through the second peripheral circuit unit (22).

## Description

### CROSS-REFERENCE TO RELATED APPLICATIONS

The present disclosure claims priority to China Patent Applications No. 201721767523.4 and 201721767522.X, filed on December 18, 2017, the entire disclosure of which is hereby incorporated by reference.

### FIELD OF THE INVENTION

The present disclosure relates to, but is not limited to, the field of the photovoltaic, and in particular to a charge and discharge controller and a solar power supply system.

### BACKGROUND

Solar power system typically includes a solar panel, a solar charge and discharge controller, and a battery. The solar charge and discharge controller is an important part of the solar power supply system for controlling the charging of the battery by the solar panel and the supply of power to a load. However, the conventional solar charge and discharge controller has only a single power output interface and can only perform RS485 communication connection with the load, and the application scenario is limited.

### SUMMARY

Embodiments of the present disclosure provide a charge and discharge controller and a solar power supply system.

In a first aspect, an embodiment of the present disclosure provides a charge and discharge controller comprising a controller module and a function expansion module, wherein the controller module includes a first CPU control unit, a first peripheral circuit unit connected to the first CPU control unit, and a load output port connected to the first peripheral circuit unit, the function expansion module includes a load interface, a second CPU control unit, a second peripheral circuit unit connected to the second CPU control unit, and a communication port; the communication port is connected to at least one of the first peripheral circuit unit and the second peripheral circuit unit, and the first CPU control unit is connected to the second CPU control unit, the load output port is connected to the load interface through the second peripheral circuit unit.

In a second aspect, an embodiment of the present disclosure provides a solar power supply system including a solar panel, a solar charge and discharge controller, and a battery. The solar charge and discharge controller is connected to the solar panel and the battery. The solar charge and discharge controller is the charge and discharge controller of the present disclosure.

### BRIEF DESCRIPTION OF THE DRAWINGS

FIG. 1 is a schematic structural diagram showing a charge and discharge controller according to an embodiment of the present disclosure.
FIG. 2 is a schematic structural diagram showing a charge and discharge controller according to another embodiment of the present disclosure.
FIG. 3 is a schematic structural diagram showing a charge and discharge controller according to another embodiment of the present disclosure.
FIG. 4 is a schematic diagram showing a connection relationship between a controller module and a function expansion module according to an embodiment of the present disclosure.
FIG. 5 is a schematic diagram showing a connection relationship between a controller module, a function expansion module, and a RS485-to-CAN communication module according to an embodiment of the present disclosure.
FIG. 6 is a schematic diagram showing a connection relationship between a controller module, a function expansion module, and a RS485-to-CAN communication module according to another embodiment of the present disclosure.

### DETAILED DESCRIPTION OF THE EMBODIMENTS

In the drawing, 1 is a controller module, 11 is a first CPU control unit, 12 is a first peripheral circuit unit, 13 is a battery interface, 14 is a solar panel interface, 15 is a load output port, and 2 is a function expansion module. 21 is a second CPU control unit, 22 is a second peripheral circuit unit, 23 is a RS485 communication interface, 25 is a load interface, 221 is a primary relay, 222 is a DC/DC power supply circuit, 223 is a secondary relay, 224 is a current-voltage detecting circuit, 225 is a protection circuit, 3 is a network communication module, and 4 is a RS485-to-CAN communication module.

The technical solutions of the present disclosure will be described clearly and completely by reference to the accompanying drawings. It is obvious that the described embodiments are a part of, rather than all of the embodiments of the present disclosure. Based on the embodiments of the present disclosure, all other embodiments obtained by a person skilled in the art without creative work will fall within the scope of the present disclosure.

In the description of the present disclosure, it should be noted that, an orientation or positional relationship indicated by the terms "center", "upper", "lower", "left", "right", "vertical", "horizontal", "inside", "outside", etc. is based on an orientation or positional relationship shown in the drawings, and is merely for the convenience of describing the present disclosure and simplifying the description, rather than indicating or implying that the referred module, device or element must have the specific orientation and be construed or operated in the specific orientation, thus these terms are not to be construed as limiting the disclosure. Moreover, the terms "first" and "second" are used for descriptive purposes only and are not to be construed as indicating or implying relative importance.

In the description of the present disclosure, it should be noted that the terms "mounted" "connected", and "connect" are to be understood broadly unless otherwise specifically defined and limited. For example, the connection may be a fixed connection, a detachable connection, or an integral connection. The connection may be a mechanical connection, an electrical connection, a physical connection or a communication connection, and the like. The connection may be directly connected (i.e., two components being directly connected refers to other components are not connected between the two components), may be indirectly connected through an intermediate medium (i.e., the two components being indirectly connected refers to other components are also connected between the two components), or may be an internal connection between the two components. The specific meanings of the above terms in the present disclosure can be understood in the specific circumstances by a person skilled in the art.

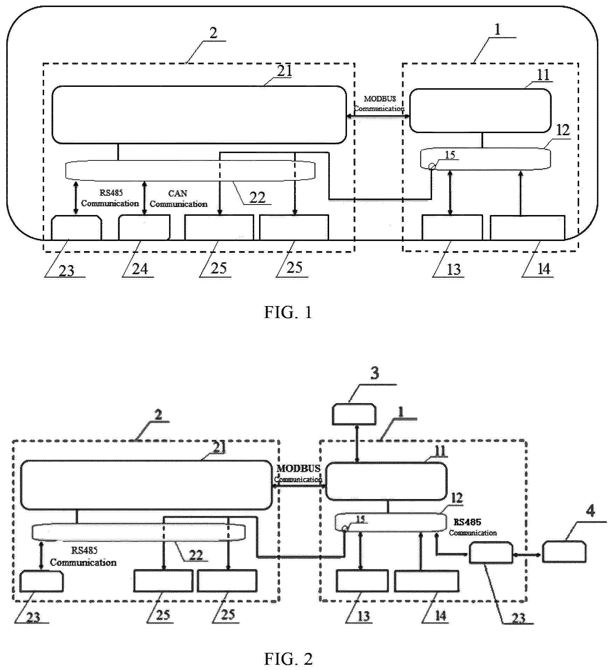

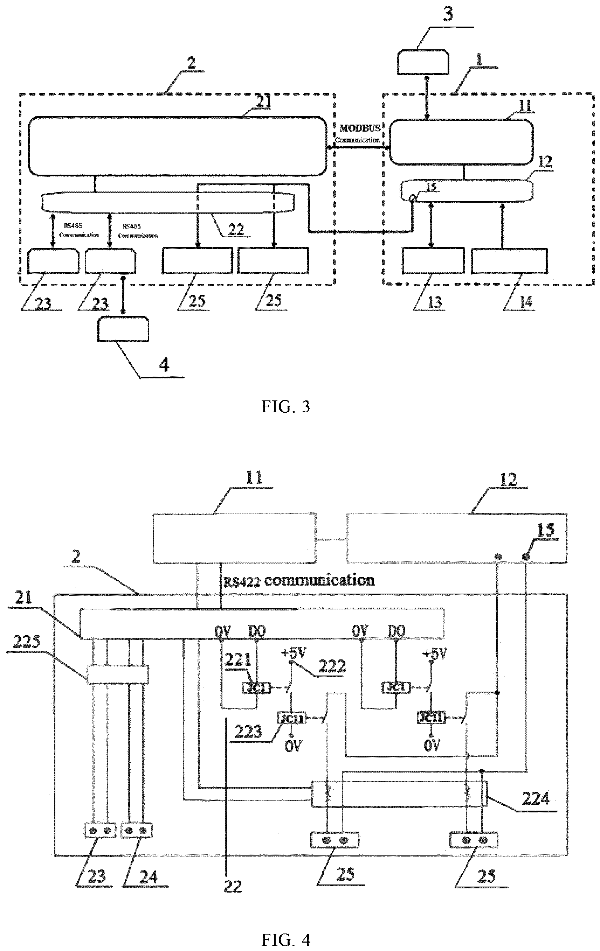

FIG. 1 is a schematic structural diagram showing a charge and discharge controller according to an embodiment of the present disclosure. FIG. 4 is a schematic diagram showing a connection relationship between a controller module and a function expansion module according to an embodiment of the present disclosure. As shown in FIG. 1, an embodiment of the present disclosure provides a charge and discharge controller including a controller module 1 and a function expansion module 2. The controller module 1 includes a first CPU control unit 11, a first peripheral circuit unit 12 connected to the first CPU control unit 11, and a load output port 15 connected to the first peripheral circuit unit 12. The function expansion module 2 includes a load interface 25, a second CPU control unit 21, a second peripheral circuit unit 22 connected to the second CPU control unit 21, and a communication port connected to the second peripheral circuit unit 22. The first CPU control unit 11 is connected to the second CPU control unit 21, and the load output port 15 is connected to the load interface 25 through the second peripheral circuit unit 22. The communication port includes at least one CAN communication interface 24 to achieve a communication between the charge and discharge controller and the CAN communication device. That is to say, the second CPU control unit 21 of the function expansion module 2 has a CAN communication function element.

In the present disclosure, according to an exemplary embodiment, the communication port further includes at least one RS485 communication interface 23 to achieve a communication between the charge and discharge controller and the RS485 communication device. That is to say, in this case, the second CPU control unit 21 of the function expansion module 2 has a RS485 communication function element.

In the present disclosure, according to an exemplary embodiment, the controller module 1 further includes at least one RS485 communication interface connected to the first peripheral circuit unit 12 to achieve a communication between the charge and discharge controller and the RS485 communication device. That is to say, in this case, the first CPU control unit 11 of the controller module 1 has the RS485 communication function element.

In the present disclosure, according to an exemplary embodiment, the first CPU control unit 11 performs a MODBUS communication connection with the second CPU control unit 21. According to an exemplary embodiment, the manner of the MODBUS communication connection may be a RS422 communication connection, a RS485 communication connection or a RS232 communication connection. According to an exemplary embodiment, the manner of the MODBUS communication connection may be a RS422 communication connection.

In the present disclosure, as shown in FIG. 4, the second peripheral circuit unit 22 includes a primary relay (JC1) 221, a DC/DC power supply circuit 222, a secondary relay (JC11) 223, a current-voltage detecting circuit 224, and a protection circuit 225. The second CPU control unit 21, the primary relay (JC1) 221, and the secondary relay (JC11) 223 are sequentially connected. Both ends of the DC/DC power supply circuit 222 are respectively connected to a contact of the primary relay (JC1) 221 and a coil of the secondary relay (JC11) 223. The current-voltage detecting circuit 224 is disposed between the second CPU control unit 21 and the load interface 25 for detecting current and voltage during the load operation. The protection circuit 225 is disposed between the second CPU control unit 21 and the at least one CAN communication interface 24. The load output port 15 is connected to the load interface 25 through a contact of the secondary relay (JC11) 223. It should be understood by a person skilled in the art that, in FIG. 4, the DC/DC power supply circuit 222, +5V is only an example, which does not mean that a driving voltage of a relay of the DC/DC power supply circuit 222 may only be 5V, for example, the driving voltage may be 6V, 12V and so on.

In the present disclosure, according to an exemplary embodiment, when the communication port further includes at least one RS485 communication interface 23, the protection circuit 225 is further disposed between the second CPU control unit 21 and the at least one RS485 communication interface 23.

In the present disclosure, according to an exemplary embodiment, the protection circuit 225 includes at least one of an overcurrent protection circuit, a short circuit protection circuit, an overvoltage protection circuit, an undervoltage protection circuit, and an overtemperature protection circuit.

In the present disclosure, according to an exemplary embodiment, in the function expansion module 2, the number of the load interface 25 is at least two.

In the present disclosure, according to an exemplary embodiment, the first peripheral circuit unit 12 includes a charge control circuit, a discharge control circuit, a temperature detecting circuit, and a signal output circuit. The first CPU control unit 11 is connected to the charge control circuit, the discharge control circuit, the temperature detecting circuit, and the signal output circuit.

In the present disclosure, according to an exemplary embodiment, the first peripheral circuit unit 12 further includes a protection circuit, and the first CPU control unit 12 is connected to the protection circuit. When the controller module 1 further includes at least one RS485 communication interface, the protection circuit is disposed between the first CPU control unit 11 and the at least one RS485 communication interface.

As shown in FIG. 1, it should be understood by a person skilled in the art that, the controller module 1 further includes a battery interface 13 and a solar panel interface 14. The charge control circuit is respectively connected to the battery and the solar panel, and the discharge control circuit is respectively connected to the battery and the load. The temperature detecting circuit is connected to a temperature sensor. Moreover, a person skilled in the art should also understand that, the charge and discharge controller of the present disclosure includes a housing, and the above-mentioned controller module 1 and function expansion module 2 disposed in the housing. The battery interface 13, the solar panel interface 14, the RS485 communication interface 23, the CAN communication interface 24, and the load interface 25 may be disposed on the housing, and the load output port 15 may be disposed on the circuit board on which the first peripheral circuit unit 12 is located.

The controller module 1 may perform a charge and discharge management on the battery, the solar panel, and the like, and the controller module 1 may be various controller modules for performing MODBUS communication connection commonly used in the field. Respective component units such as the first CPU control unit, a first peripheral circuit unit, and the like included in this controller module may each be a corresponding component unit conventional in the art. The corresponding component unit in this case each is well known to a person skilled in the art, and is not described herein again.

In the present disclosure, the first CPU control unit 11 and the second CPU control unit 21 may include a chip (such as a single chip microcomputer or an ARM processor) or the like.

In the present disclosure, according to an exemplary embodiment, the charge and discharge controller includes at least two load interfaces 25 (i.e., to which different loads may be simultaneously accessed). The at least two load interfaces 25 are program controllable load interfaces, i.e., the charge and discharge controller may implement program controllable for at least two loads. For example, the program controllable manner may include, but is not limited to that: the first CPU control unit 11 of the controller module 1 and the second CPU control unit 21 of the function expansion module 2 perform the MODBUS communication connection (such as the RS422 communication connection); and the second CPU control unit 21 includes a functional chip with multiple DO outputs and multiple communication modes, and each of the load interface 25 may be controlled by controlling a secondary development of a chip program in the second CPU control unit 21. In this way, a power impact of a large current on the chip is completely eliminated by the load interface 25 through two levels of relay isolation. In this case, the second CPU control unit 21, the primary relay 221 and the secondary relay 223 are sequentially connected. Both ends of the DC/DC power supply circuit 222 are respectively connected to the contact of the primary relay 221 and the coil of the secondary relay 223, and the load output port 15 is connected to the load interface 25 through the contact of the secondary relay 223. When the chip program requires the DO to have an output, the primary relay 221 is controlled to pull in, and the secondary relay 223 is pulled in after the contact of the primary relay 221 is closed such that the contact of the secondary relay 223 is closed, thereby achieving an electrical output of the load interface 25. The current-voltage detecting circuit 224 is disposed between the second CPU control unit 21 and the load interface 25, and the protection circuit 225 is disposed between the second CPU control unit 21 and the at least one CAN communication interface 24 and is disposed between the second CPU control unit 21 and the at least one RS485 communication interface 23. In this way, a working condition of the load can be detected in real time, and a protection value of the overcurrent and overvoltage may be preset according to electrical parameters of the load.

According to an embodiment of the present disclosure, as shown in FIGS. 1 and 4, this charge and discharge controller includes a housing, and a controller module 1 and a function expansion module 2 disposed in the housing. The controller module 1 includes a first CPU control unit 11, a first peripheral circuit unit 12 connected to the first CPU control unit 11, and a load output port 15 connected to the first peripheral circuit unit 12. The function expansion module 2 includes at least two a load interfaces 25, a second CPU control unit 21, a second peripheral circuit unit 22 connected to the second CPU control unit 21, and a communication port connected to the second peripheral circuit unit 22. The first CPU control unit 11 and the second CPU control unit 21 perform a RS422 communication connection. The load output port 15 is connected to the load interface 25. The communication port includes at least one CAN communication interface 24 and at least one RS485 communication interface 23 (the communication port acts as an integral communication interface of the charge and discharge controller) to achieve a communication between the charge and discharge controller and the CAN communication device and a communication between the charge and discharge controller and the RS485 communication device.

The second peripheral circuit unit 22 includes a primary relay 221, a DC/DC power supply circuit 222, a secondary relay 223, a current-voltage detecting circuit 224, and a protection circuit 225. The second CPU control unit 21, the primary relay 221 and the secondary relay 223 are sequentially connected. Both ends of the DC/DC power supply circuit 222 are respectively connected to a contact of the primary relay 221 and a coil of the secondary relay 223. The current-voltage detecting circuit 224 is disposed between the second CPU control unit 21 and the load interface 25 for detecting a current and a voltage during the load operation. The protection circuit 225 is disposed between the second CPU control unit 21 and the at least one CAN communication interface 24 and between the second CPU control unit 21 and the at least one RS485 communication interface 23. The load output port 15 is connected to the load interface 25 through the contact of the secondary relay 223.

The controller module 1 further includes a battery interface 13 and a solar panel interface 14. The first peripheral circuit unit 12 includes a charge control circuit, a discharge control circuit, a temperature detecting circuit and a signal output circuit. The first CPU control unit 11 is connected to the charge control circuit, the discharge control circuit, the temperature detecting circuit and the signal output circuit. The charge control circuit may be respectively connected to the battery and the solar panel, and the discharge control circuit may be respectively connected to the battery and the load. The temperature detecting circuit is connected to a temperature sensor disposed on the outside. The battery interface 13, the solar panel interface 14, the RS485 communication interface 23, the CAN communication interface 24, and the load interface 25 are all disposed on the housing, and the load output port 15 is disposed on a circuit board on which the first peripheral circuit unit 12 is located.

In the above charge and discharge controller according to the present disclosure, the controller module 1 performs a charge and discharge management on the battery, the solar panel, and the like. The first CPU control unit 11 of the controller module 1 and the second CPU control unit of the function expansion module 2 perform a RS422 communication connection. The second CPU control unit 21 is connected to the at least one CAN communication interface 24 and the at least one RS485 communication interface 23 to expand a communication function for the charge and discharge controller. In this way, the controller module 1 may be in a communication with a RS485 communication device, while may be in a free communication with a CAN communication device.

The above charge and discharge controller of the present disclosure may achieve program controllable for at least two loads, and the program controllable manner may include, but is not limited to that: the second CPU control unit 21 includes a functional chip with multiple DO outputs and multiple communication modes; and each of the load interface 25 may be controlled by controlling a secondary development of a chip program in the second CPU control unit 21. In this way, a power impact of a large current on the chip is completely eliminated by the load interface 25 through two levels of relay isolation. In this case, the second CPU control unit 21, the primary relay 221 and the secondary relay 223 are sequentially connected. Both ends of the DC/DC power supply circuit 222 are respectively connected to the contact of the primary relay 221 and the coil of the secondary relay 223, and the load output port 15 is connected to the load interface 25 through the contact of the secondary relay 223. When the chip program requires the DO to have an output, the primary relay 221 is controlled to pull in, and the secondary relay 223 is pulled in after the contact of the primary relay 221 is closed such that the contact of the secondary relay 223 is closed, thereby achieving an electrical output of the load interface 25. The current-voltage detecting circuit 224 is disposed between the second CPU control unit 21 and the load interface 25, and the protection circuit 225 is disposed between the second CPU control unit 21 and the at least one CAN communication interface 24 and is disposed between the second CPU control unit 21 and the at least one RS485 communication interface 23. In this way, a working condition of the load can be detected in real time, and a protection value of the overcurrent and overvoltage may be preset according to electrical parameters of the load.

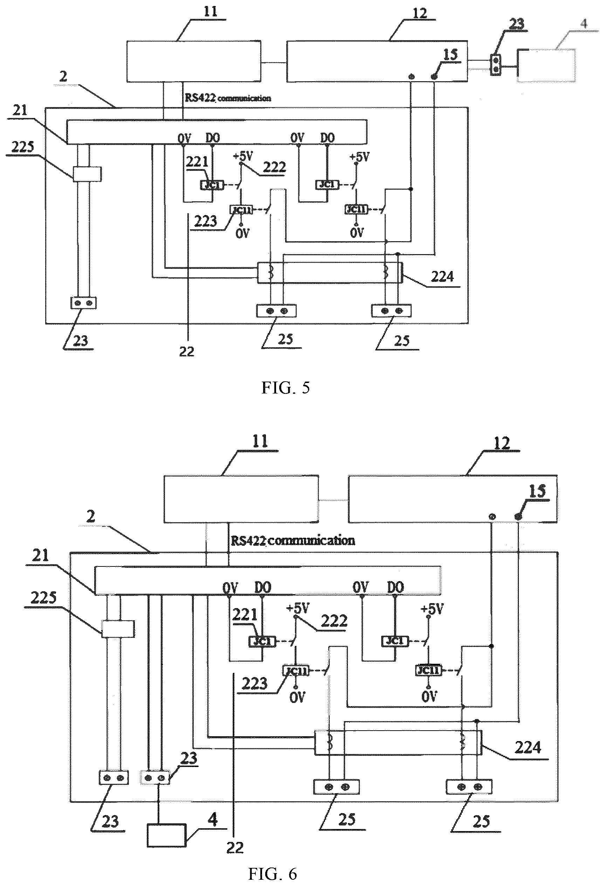

FIGS. 2 and 3 are schematic structural diagrams showing a charge and discharge controller according to an embodiment of the present disclosure. FIGS. 5 and 6 are schematic diagrams showing a connection relationship among a controller module, a function expansion module, and a RS485-to-CAN communication module according to an embodiment of the present disclosure. As shown in FIGS. 2 and 3, an embodiment of the present disclosure provides a charge and discharge controller including a controller module 1, a function expansion module 2, and a RS485-to-CAN communication module 4. The controller module 1 includes a first CPU control unit 11, a first peripheral circuit unit 12 connected to the first CPU control unit 11, and a load output port 15 connected to the first peripheral circuit unit 12. The function expansion module 2 includes a load interface 25, a second CPU control unit 21, and a second peripheral circuit unit 22 connected to the second CPU control unit 21. The first CPU control unit 11 is connected to the second CPU control unit 21, and the load output port 15 is connected to the load interface 25 through the second peripheral circuit unit 22.

At least one of the first peripheral circuit unit 12 and the second peripheral circuit unit 22 is connected to at least one RS485 communication interface 23, and is connected to the RS485-to-CAN communication module 4 through the at least one RS485 communication interface 23 to convert a RS485 communication protocol into a CAN communication protocol, thereby achieving a communication between the charge and discharge controller and a CAN communication device.

In an embodiment, as shown in FIGS. 2 and FIG. 5, the first peripheral circuit unit 12 is connected to at least one RS485 communication interface 23, and is connected to the RS485-to-CAN communication module 4 through the at least one RS485 communication interface 23 to convert a RS485 communication protocol into a CAN communication protocol, thereby achieving a communication between the charge and discharge controller and a CAN communication device.

In an embodiment, as shown in FIGS. 3 and 6, the second peripheral circuit unit 22 is connected to the at least one RS485 communication interface 23, and is connected to the RS485-to-CAN communication module 4 through the at least one RS485 communication interface 23 to convert a RS485 communication protocol into a CAN communication protocol, thereby achieving a communication between the charge and discharge controller and a CAN communication device.

In the present disclosure, the RS485-to-CAN communication module 4 is not particularly limited. For example, the RS485-to-CAN communication module 4 may be a corresponding module for converting the RS485 communication protocol into the CAN communication protocol commonly used in the art, and the specific composition of this module is well known to a person skilled in the art. For example, this module may include a RS485 communication interface, a converter, a protection circuit, and a CAN communication interface that are sequentially connected. In an exemplary embodiment, the at least one RS485 communication interface connected to at least one of the first peripheral circuit unit 12 and the second peripheral circuit unit 22 is connected to the RS485 communication interface of the RS485-to-CAN communication module. The converter is configured to convert the RS485 communication protocol into the CAN communication protocol. That is to say, the RS485-to-CAN communication module 4 has a CAN communication function element.

In the present disclosure, according to an exemplary embodiment, the function expansion module 2 further includes at least one RS485 communication interface which is connected to the second peripheral circuit unit 22 and configured to achieve a communication between the charge and discharge controller and the RS485 communication device. That is to say, in this case, the second CPU control unit 21 of the function expansion module 2 has a RS485 communication function element.

In the present disclosure, according to an exemplary embodiment, the controller module 1 further includes at least one RS485 communication interface which is connected to the first peripheral circuit unit 12 and configured to achieve a communication between the charge and discharge controller and the RS485 communication device. That is to say, in this case, the first CPU control unit 11 of the controller module 1 has a RS485 communication function element.

In the present disclosure, according to an exemplary embodiment, the first CPU control unit 11 and the second CPU control unit 21 perform a MODBUS communication connection. According to an exemplary embodiment, the MODBUS communication connection may be a RS422 communication connection, a RS485 communication connection or a RS232 communication connection. According to an exemplary embodiment, the manner of the MODBUS communication connection may be the RS422 communication connection.

In the present disclosure, according to an exemplary embodiment, as shown in FIGS. 5 and 6, the second peripheral circuit unit 22 includes a primary relay (JC1) 221, a DC/DC power supply circuit 222, and a secondary relay (JC11) 223 and a current-voltage detecting circuit 224. The second CPU control unit 21, the primary relay (JC1) 221, and the secondary relay (JC11) 223 are sequentially connected. Both ends of the DC/DC power supply circuit 222 are respectively connected to a contact of the primary relay (JC1) 221 and a coil of the secondary relay (JC11) 223. The current-voltage detecting circuit 224 is disposed between the second CPU control unit 21 and the load interface 25, and configured to detect a current and voltage during the load operation. The load output port 15 is connected to the load interface 25 through the contact of the secondary relay (JC11) 223. It should be understood by a person skilled in the art that the DC/DC power supply circuit 222 in FIGS. 5 and 6, +5V is only an example, which does not mean that a driving voltage of the relay of the DC/DC power supply circuit 222 is not only 5V, for example, a driving voltage may also be 6V, 12V, etc.

As shown in FIGS. 5 and 6, when the function expansion module 2 further includes at least one RS485 communication interface which is connected to the second peripheral circuit unit 22 and configured to achieve a communication between the charge and discharge controller and the RS485 communication device, the second peripheral circuit unit 22 includes a protection circuit 225 disposed between the second CPU control unit 21 and the at least one RS485 communication interface 23.

In the present disclosure, according to an exemplary embodiment, the protection circuit 225 includes at least one of an overcurrent protection circuit, a short circuit protection circuit, an overvoltage protection circuit, an undervoltage protection circuit, and an overtemperature protection circuit.

In the present disclosure, according to an exemplary embodiment, in the function expansion module 2, the number of the load interface 25 is at least two.

In the present disclosure, according to an exemplary embodiment, the first peripheral circuit unit 12 includes a charge control circuit, a discharge control circuit, a temperature detecting circuit, and a signal output circuit. The first CPU control unit 11 is connected to the charge control circuit, the discharge control circuit, the temperature detecting circuit, and the signal output circuit.

In the present disclosure, according to an exemplary embodiment, the first peripheral circuit unit 12 further includes a protection circuit, and the first CPU control unit 11 is connected to the protection circuit. When the controller module 1 further includes at least one RS485 communication interface which is connected to the first peripheral circuit unit 11 and configured to achieve a communication between the charge and discharge controller and the RS485 communication device. The protection circuit is disposed between the first CPU control unit 11 and the at least one RS485 communication interface.

In the present disclosure, according to an exemplary embodiment, the charge and discharge controller further includes a network communication module 3. The network communication module 3 is connected to the first CPU control unit 11 to achieve a communication between a user terminal (such as a mobile phone APP) and the charge and discharge controller. It should be understood by a person skilled in the art that the network communication module 3 is a device (such as a wireless terminal device) for converting a serial port data into a IP data or converting the IP data into the serial port data and transmitting the transmitted data through a communication network (such as a wireless communication network), and is configured to establish a communication between a user terminal (such as the mobile phone APP) and the charge and discharge controller.

It should be understood by a person skilled in the art that, the controller module 1 further includes a battery interface 13 and a solar panel interface 14. The charge control circuit is respectively connected to the battery and the solar panel, and the discharge control circuit is respectively connected with the battery and the load. The temperature detecting circuit is connected to a temperature sensor.

The controller module 1 may perform a charge and discharge management on the battery, the solar panel, and the like, and the controller module 1 may be various controller modules for performing a MODBUS communication connection commonly used in the field, and respective component units such as a CPU control unit, a first peripheral circuit unit, and the like included in the controller module may be a corresponding component unit conventional in the art respectively. The corresponding component unit in this case is well known to a person skilled in the art, and is not described herein again.

In the present disclosure, the first CPU control unit 11 and the second CPU control unit 21 may include a chip (such as a single chip microcomputer or an ARM processor) or the like.

In the present disclosure, according to an exemplary embodiment, the charge and discharge controller includes at least two load interfaces 25 (i.e., to which different loads may be simultaneously accessed). The at least two load interfaces 25 are program controllable load interfaces, i.e., this charge and discharge controller may achieve a program controllable for at least two loads. For example, the program controllable manner may include, but is not limited to that: the first CPU control unit 11 of the controller module 1 and the second CPU control unit 21 of the function expansion module 2 perform a MODBUS communication connection (such as a RS422 communication connection); and the second CPU control unit 21 includes a functional chip with multiple DO outputs and multiple communication modes, and each of the load interface 25 may be controlled by controlling a secondary development of a chip program in the second CPU control unit 21. In this way, a power impact of a large current on the chip is completely eliminated by the load interface 25 through two levels of relay isolation. In this case, the second CPU control unit 21, the primary relay 221 and the secondary relay 223 are sequentially connected. Both ends of the DC/DC power supply circuit 222 are respectively connected to the contact of the primary relay 221 and the coil of the secondary relay 223, and the load output port 15 is connected to the load interface 25 through the contact of the secondary relay 223. When the chip program requires the DO to have an output, the primary relay 221 is controlled to pull in, and the secondary relay 223 is pulled in after the contact of the primary relay 221 is closed such that the contact of the secondary relay 223 is closed, thereby achieving an electrical output of the load interface 25. The current-voltage detecting circuit 224 is disposed between the second CPU control unit 21 and the load interface 25, and the protection circuit 225 is disposed between the second CPU control unit 21 and the at least one RS485 communication interface 23. In this way, a working condition of the load can be detected in real time, and a protection value of the overcurrent and overvoltage may be preset according to electrical parameters of the load.

In the present disclosure, the user may send a signal command to the network communication module 3 through a mobile phone APP to achieve a communication between the mobile phone APP and the charge and discharge controller. The RS485-to-CAN communication module 4 may be connected to a vehicle CAN bus to achieve a bus communication with a vehicle's central control system.

According to an embodiment of the present disclosure, as shown in FIGS. 2 and 4, the charge and discharge controller includes a controller module 1, a function expansion module 2, a network communication module 3, and a RS485-to-CAN communication module 4. The controller module 1 includes a first CPU control unit 11, a first peripheral circuit unit 12 connected to the first CPU control unit 11, and a load output port 15 connected to the first peripheral circuit unit 12. The function expansion module 2 includes at least two load interfaces 25, a second CPU control unit 21, and a second peripheral circuit unit 22 connected to the second CPU control unit 21. The first CPU control unit 11 and the second CPU control unit 21 perform a RS422 communication connection. The load output port 15 is connected to the load interface 25 through the second peripheral circuit unit 22. The first peripheral circuit unit 12 is connected to at least one RS485 communication interface 23, and is connected to a RS485-to-CAN communication module 4 through the at least one RS485 communication interface 23 for converting a RS485 communication protocol into a CAN communication protocol, thereby achieving a communication between the charge and discharge controller and the CAN communication device. The network communication module 3 is connected to the first CPU control unit 11 to achieve a communication between a user terminal (such as a mobile phone APP) and the charge and discharge controller.

In an exemplary embodiment, the function expansion module 2 further includes at least one RS485 communication interface 23 which is connected to the second peripheral circuit unit 22 and configured to achieve a communication between the charge and discharge controller and a RS485 communication device.

In an exemplary embodiment, the second peripheral circuit unit 22 includes a primary relay 221, a DC/DC power supply circuit 222, a secondary relay 223, a current-voltage detecting circuit 224, and a protection circuit 225. The second CPU control unit 21, the primary relay 221 and the secondary relay 223 are sequentially connected. Both ends of the DC/DC power supply circuit 222 are respectively connected to a contact of the primary relay 221 and a coil of the secondary relay 223. The current-voltage detecting circuit 224 is disposed between the second CPU control unit 21 and the load interface 25 for detecting a current and a voltage during the load operation. The protection circuit 225 is disposed at the second between the CPU control unit 21 and the at least one RS485 communication interface 23. The load output port 15 is connected to the load interface 25 through the contact of the secondary relay 223.

In an exemplary embodiment, the protection circuit 225 includes at least one of an overcurrent protection circuit, a short circuit protection circuit, an overvoltage protection circuit, an undervoltage protection circuit, and an overtemperature protection circuit.

In an exemplary embodiment, the controller module 1 further includes a battery interface 13 and a solar panel interface 14. The first peripheral circuit unit 12 includes a charge control circuit, a discharge control circuit, a temperature detecting circuit, and a signal output circuit. The first CPU control unit 11 is connected to the charge control circuit, the discharge control circuit, the temperature detecting circuit and the signal output circuit. The charge control circuit may be connected to the battery and the solar panel respectively, and the discharge control circuit may be connected to the battery and the load respectively. The temperature detecting circuit is connected to a temperature sensor on the outside.

In the above charge and discharge controller of the present disclosure, the controller module 1 performs a charge and discharge management on the storage battery, the solar panel, and the like. The first CPU control unit 11 of the controller module 1 and the second CPU control unit 21 of the function expansion module 2 perform a RS422 communication connection. The function expansion module 2 further includes at least one RS485 communication interface 23 which is connected to the second peripheral circuit unit 22 and configured to achieve a communication between the charge and discharge controller and a RS485 communication device. The RS485-to-CAN communication module 4 may convert a RS485 communication protocol to a CAN communication protocol. Thus, the charge and discharge controller may not only be in a communication with the RS485 communication device, but also in a free communication with a CAN communication device.

The above described charge and discharge controller of the present disclosure may achieve a program controllable for at least two loads. For example, the program controllable manner may include, but is not limited to that: the second CPU control unit 21 includes a functional chip with multiple DO outputs and multiple communication modes, and each of the load interfaces 25 may be controlled by controlling a secondary development of a chip program in the second CPU control unit 21. In this way, a power impact of a large current on the chip is completely eliminated by the load interface 25 through two levels of relay isolation. In this case, the second CPU control unit 21, the primary relay 221 and the secondary relay 223 are sequentially connected. Both ends of the DC/DC power supply circuit 222 are respectively connected to the contact of the primary relay 221 and the coil of the secondary relay 223, and the load output port 15 is connected to the load interface 25 through the contact of the secondary relay 223. When the chip program requires the DO to have an output, the primary relay 221 is controlled to pull in, and the secondary relay 223 is pulled in after the contact of the primary relay 221 is closed such that the contact of the secondary relay 223 is closed, thereby achieving an electrical output of the load interface 25. The current-voltage detecting circuit 224 is disposed between the second CPU control unit 21 and the load interface 25, and the protection circuit 225 is disposed between the second CPU control unit 21 and the at least one RS485 communication interface 23. In this way, a working condition of the load can be detected in real time, and a protection value of the overcurrent and overvoltage may be preset according to electrical parameters of the load. In addition, the user may send a signal command to a network communication module 3 through a mobile phone APP to achieve a communication between the mobile phone APP and the charge and discharge controller. The RS485-to-CAN communication module 4 may be connected to a vehicle CAN bus to achieve a bus communication with a vehicle's central control system.

An embodiment of the present disclosure provides a solar power supply system including a solar panel, a solar charge and discharge controller, and a battery. The solar charge and discharge controller is connected to the solar panel and the battery, and the solar charge and discharge controller is the charge and discharge controller of the present disclosure.

As described above, in the first peripheral circuit 12 of the controller module 1 of the solar charge and discharge controller, the charge control circuit may be respectively connected to the battery and the solar panel, and the discharge control circuit may be respectively connected to the battery and the load.

In the present disclosure, according to an exemplary embodiment, the solar charge and discharge controller is connected to a CAN communication device through the RS485-to-CAN communication module. For example, the solar charge and discharge controller is connected to the vehicle CAN bus device through the RS485-to-CAN communication module, which achieves the application of the solar charge and discharge controller in the vehicle field.

In the present disclosure, according to an exemplary embodiment, the solar charge and discharge controller is connected to the RS485 communication device through the at least one RS485 communication interface.

In the present disclosure, according to an exemplary embodiment, the solar panel is at least one of a crystalline silicon solar cell, an amorphous silicon thin film solar cell, a copper indium gallium selenide thin film solar cell, a cadmium telluride thin film solar cell, a gallium arsenide thin film solar cell, a dye-sensitized solar cell and an organic flexible solar cell.

An embodiment of the present disclosure also provides a vehicle solar power supply system including a solar panel, the above solar charge and discharge controller, and a battery. The solar charge and discharge controller is connected to the solar panel and the battery. The solar panel may be mounted in any suitable location that can be mounted on the vehicle, such as two sides of window glass, a skylight glass, a roof, etc. to convert solar energy into electrical energy.

In the present disclosure, according to an exemplary embodiment, the battery is at least one of a lithium battery, a nickel hydrogen battery, a lead acid battery, and a lithium iron phosphate battery.

At present, the vehicles on the market are all locked after the owner locks the car and the vehicle is powered off. The vehicle solar power supply system of the present disclosure can effectively utilize sunlight, to convert solar energy into electrical energy and ensure that the vehicle battery is always in a fully charged state. The solar charge and discharge controller may achieve a communication with a vehicle central control system and receive control of the vehicle central control system. For example, the owner may remotely operate an interior electric heating, a blower, a mode damper, an air purifier, a central control video, a glass elevator and other devices through a mobile APP, and so on. For example, in summer, the owner may turn on the blower in advance to cool the inside of the vehicle, thereby bringing the vehicle into the cool. For example, in winter, the owner may turn on a heating function in advance to give the owner a sense of warmth. For example, in fog-haze weather, the owner may turn on the air purifier in advance to give the owner a sense of fresh. For example, when the two sides of window glass or the skylight glass of the vehicle is forgotten to be closed (or is not sure whether to close), the owner may use the mobile phone to control a glass elevator. For example, in winter, the owner may turn on the mode damper defrost function in advance. The vehicle solar power supply system can supply power to the vehicle battery at any time, and can avoid the problem that the vehicle cannot be started when the battery is short of electricity due to absence of use for a long-term or other reasons.

Some embodiments of the present disclosure have been described in detail above with reference to the accompanying drawings, but the present disclosure is not limited thereto. Various simple modifications may be made to the technical solutions of the present disclosure within the scope of the technical idea of the present disclosure, including various specific technical features combined in any suitable manner. In order to avoid unnecessary repetition, the present disclosure will not be further described in various possible combinations. However, these simple variations and combinations are also considered to be the disclosure of the present disclosure, and are all within the scope of the present disclosure.

## Claims

1. A charge and discharge controller comprising a controller module (1) and a function expansion module (2), wherein
the controller module (1) includes a first CPU control unit(11), a first peripheral circuit unit (12) connected to the first CPU control unit (11), and a load output port (15) connected to the first peripheral circuit unit (12),
the function expansion module (2) includes a load interface (25), a second CPU control unit (21), a second peripheral circuit unit (22) connected to the second CPU control unit (21), and a communication port; the communication port is connected to at least one of the first peripheral circuit unit (12) and the second peripheral circuit unit (22), and
the first CPU control unit (11) is connected to the second CPU control unit (21), the load output port (15) is connected to the load interface (25) through the second peripheral circuit unit (22).

2. The charge and discharge controller according to claim 1, wherein
the communication port includes at least one CAN communication interface (24) to achieve a communication between the charge and discharge controller and a CAN communication device.

3. The charge and discharge controller according to claim 2, wherein
the communication port further includes at least one RS485 communication interface (23) to achieve a communication between the charge and discharge controller and a RS485 communication device.

4. The charge and discharge controller according to claim 2, wherein
the controller module (1) further includes at least one RS485 communication interface (23) connected to the first peripheral circuit unit (12) to achieve a communication between the charge and discharge controller and a RS485 communication device.

5. The charge and discharge controller according to claim 1, wherein
the first CPU control unit (11) and the second CPU control unit (21) perform a MODBUS communication connection.

6. The charge and discharge controller according to claim 5, wherein
a manner of the MODBUS communication connection includes at least one of a RS422 communication connection, a RS485 communication connection, and a RS232 communication connection.

7. The charge and discharge controller according to claim 2, wherein
the second peripheral circuit unit (22) includes a primary relay (221), a DC/DC power supply circuit (222), a secondary relay (223), a current-voltage detecting circuit (224), and a protection circuit (225),
the second CPU control unit (21), the primary relay (221), and the secondary relay (223) are sequentially connected,
both ends of the DC/DC power supply circuit (222) are respectively connected to a contact of the primary relay (221) and a coil of the secondary relay (223),
the current-voltage detecting circuit (224) is disposed between the second CPU control unit (21) and the load interface (25),
the protection circuit (225) is disposed between the second CPU control unit (21) and the at least one CAN communication interface (24), and
the load output port (15) is connected to the load interface (25) through the contact of the secondary relay (223).

8. The charge and discharge controller according to claim 7, wherein
in the case where the communication port further includes at least one RS485 communication interface (23), the protection circuit (225) is further disposed between the second CPU control unit (21) and the at least one RS485 communication interface (23).

9. The charge and discharge controller according to claim 3 further comprising a RS485-to-CAN communication module (4), wherein
at least one of the first peripheral circuit unit (12) and the second peripheral circuit unit (22) is connected to the at least one RS485 communication interface (23), and is connected to the RS485-to-CAN communication module (4) through the at least one RS485 communication interface (23) to convert a RS485 communication protocol into a CAN communication protocol, thereby achieving the communication between the charge and discharge controller and the CAN communication device.

10. The charge and discharge controller according to claim 4 further comprising a RS485-to-CAN communication module (4), wherein
at least one of the first peripheral circuit unit (12) and the second peripheral circuit unit (22) is connected to the at least one RS485 communication interface (23), and is connected to the RS485-to-CAN communication module (4) through the at least one RS485 communication interface (23) to convert a RS485 communication protocol into a CAN communication protocol, thereby achieving the communication between the charge and discharge controller and the CAN communication device.

11. The charge and discharge controller according to any one of claims 1 to 10, wherein
in the function expansion module (2), the number of the load interfaces (25) is at least two.

12. The charge and discharge controller according to any one of claims 1 to 10, wherein
the first peripheral circuit unit (12) includes a charge control circuit, a discharge control circuit, a temperature detecting circuit, and a signal output circuit, and the first CPU control unit (11) is connected to the charge control circuit, the discharge control circuit, the temperature detecting circuit, and the signal output circuit.

13. The charge and discharge controller according to claim 12, wherein
the first peripheral circuit unit (12) further includes a protection circuit (225), and the first CPU control unit (11) is connected to the protection circuit (225), and
in the case where the controller module (1) further includes at least one RS485 communication interface (23), the protection circuit (225) is disposed between the first CPU control unit (11) and the at least one RS485 communication interface (23).

14. The charge and discharge controller according to claim 1 further comprising a network communication module (3), wherein
the network communication module (3) is connected to the first CPU control unit (11) to achieve a communication between a user terminal and the charge and discharge controller.

15. A solar power supply system comprising a solar panel, a solar charge and discharge controller, and a battery, wherein
the solar charge and discharge controller is connected to the solar panel and the battery, and the solar charge and discharge controller is the charge and discharge controller according to any one of claims 1-14.
